# EUROPÄISCHE PATENTSCHRIFT

(11) **EP 1 042 412 B1**
(45) Veröffentlichungstag und Bekanntmachung des Hinweises auf die Patenterteilung: **03.04.2002**
(21) Anmeldenummer: 98965875.2
(22) Anmeldetag: 22.12.1998
(51) Int. Cl.: C09D 5/03, C08G 63/78

(54) **VERFAHREN ZUR HERSTELLUNG EINER PULVERLACKZUSAMMENSETZUNG**
METHOD FOR PRODUCING A COATING POWDER COMPOSITION
PROCEDE DE PREPARATION D'UNE COMPOSITION DE PEINTURE PULVERULENTE

(30) Priorität: 23.12.1997 DE 19757544
(43) Veröffentlichungstag der Anmeldung: 11.10.2000
(73) Patentinhaber: E.I. DU PONT DE NEMOURS AND COMPANY, Wilmington Delaware 19898 (US)
(72) Erfinder: GRÄF, Knut, D-45525 Hattingen (DE); SIMMROCK, Hans-Ulrich, 40627 Düsseldorf (DE); JACOBS, Alexandra, D-65527 Niedernhausen (DE); MÖRS, Volker, D-60529 Frankfurt am Main (DE); WARD, Bennett, D-61462 Königstein (DE)
(74) Vertreter: Gille Hrabal Struck Neidlein Prop Roos
(86) Internationale Anmeldenummer: EP9808460
(87) Internationale Veröffentlichungsnummer: WO9933926

(56) Entgegenhaltungen:
- EP-A- 0 751 166
- FR-A- 2 233 351

## Beschreibung

Die Erfindung betrifft die Herstellung von farbigen Pulverlacken insbesondere für den Einsatz in Pulverbeschichtungszusammensetzungen. Die Erfindung betrifft auch die Verwendung der erhaltenen Pulverlacke zur Beschichtung von Substraten, sowie die dabei erhaltenen beschichteten Substrate.

Im allgemeinen werden Pulverlacke nach der üblichen Extruder-Technologie hergestellt. Dazu werden die Bestandteile des Pulverlackes, d.h. Bindemittel, Härter und gegebenenfalls Pigmente und weitere Additive, als Feststoffe in den erforderlichen Mengenverhältnissen trocken intensiv vorgemischt und anschließend in einem Extruder bei möglichst niedriger Temperatur aufgeschmolzen und intensiv durchmischt. Dabei erfolgt die Plastifizierung der Bindemittel und Härter und die Benetzung der gegebenenfalls enthaltenen Pigmente und Füllstoffe. Anschließend wird das erhaltene, gegebenenfalls gefärbte Extrudat in eine dünne Schicht ausgewalzt, abgekühlt und in ein grobes Granulat gebrochen, welches in einer Mühle zum fertigen Pulverlack vermahlen wird.

Bei diesem Verfahren kann es zu Schwierigkeiten, insbesondere bezüglich des Extrusionsvorganges und des Mahlvorganges kommen. Für hochreaktive Bindemittelmischungen kann der Extrusionsvorgang zu langsam verlaufen, so daß partielle Gelbildung eintritt, währenddessen eine Senkung der Verweilzeit im Extruder die Dispergierung der Pigmente im Bindemittel negativ beeinflußt. Darüber hinaus können mit dem Extruder nur Bindemittel in einem bestimmten Viskosititätsbereich verarbeitet werden. Das beim Vermahlen sich bildende breite Teilchengrößenspektrum in einem Bereich von beispielsweise 0,1 bis 500 Mikrometer erfordert für spezifische Anwendungszwecke zusätzliche Sieb- und Mahlvorgänge. Darüber hinaus ist das anfallende Feinkorn aus gesundheitlichen- und verarbeitungstechnischen Gründen nachteilig.

Weiterhin ist bekannt, zur Herstellung von Pulverlacken niedermolekulare inerte Verbindungen in Form von kompressiblen Fluiden als Hilfsmittel einzusetzen. Dabei wird die Lösung bzw. Suspension aus dem kompressiblen Fluid und den Komponenten der Pulverlack-Zusammensetzung unter Entspannung versprüht, so daß die durch den Entspannungsprozeß hervorgerufene Abkühlung die Bildung der Pulverlackpartikel bewirkt. Es können Teilchengrößen von 5 bis 150 Mikrometer, aber auch sehr feine Teilchen im Bereich von 1 bis 5 Mikrometer durch Einsatz entsprechender Düsen erzielt werden.

Bei derartigen Verfahren sind in der Regel hohe Drücke und große Gasmengen erforderlich, um die jeweiligen Feststoffe in dem überkritischen Fluid aufzulösen.

Weitere Methoden zur Herstellung von Pulvern basieren auf den sogenannten "nonaqueous dispersion (NAD) processes". Dabei wird ein Polymer oder ein Polymervorprodukt, beispielsweise ein Polyester, in ein Dispersionsmedium bei einer Temperatur von beispielsweise unter 200°C eingebracht. Für die Herstellung von farbigen Pulvern werden Pigmente der Dispersion zugefügt, bevorzugt nach Abkühlung der Dispersion. Die entsprechenden Pulverteilchen werden erhalten durch weiteres Abkühlen, Abtrennen und der Trocknung der resultierenden Partikel.

Durch die Zugabe der Pigmente bei erniedrigter Temperatur, beispielsweise bei Raumtemperatur oder geringfügig erhöhter Temperatur, entstehen Probleme bezüglich der Bindung zwischen Polymerteilchen und Pigmentteilchen dahingehend, daß eine Separierung zwischen den Teilchen erfolgt. Werden die Pigmente dagegen bei relativ hoher Temperatur der Dispersion zugefügt, treten veränderte Teilchengrößen auf. Generell ist es bei derartigen Verfahren schwierig, eine enge Teilchengrößenverteilung sowie homogen aufgebaute Partikel zu erzielen. Beschichtungen mit Pulverlackzusammensetzungen auf der Basis derartiger NAD-Lackpulver sind aufgrund auftretender Störungen im Lackfilm, beispielsweise Kraterbildung, nicht zufriedenstellend.

Aufgabe der vorliegenden Erfindung ist es daher, ein Verfahren auf der Basis eines NAD-Prozesses für pigmentierte Lackpulver zu entwickeln, durch welches Pulverpartikel mit einem engen Korngrößenbereich und einem homogenen Partikelaufbau resultieren und Pulverbeschichtungen mit Pulverlackzusammensetzungen auf der Basis derartig hergestellter pigmentierter Lackpulver mit den erwünschten guten Lackeigenschaften erzielt werden.

Die Aufgabe wird gelöst durch ein den Gegenstand der Erfindung bildendes Verfahren, zur Herstellung einer Pulverlackzusammensetzung auf Polyesterbasis durch
a) gemeinsames oder getrenntes Erwärmen von
   A) 99-40 Gew.-% eines oder mehrerer Polyester-Präkondensate, und/oder von zu deren Herstellung verwendbaren Monomeren,
   B) 1-60 Gew.-% eines oder mehrerer Pigmente und
   C) 0-10 Gew.-% eines oder mehrerer Netzadditive und/oder weiterer lacküblicher Additive,
   wobei sich die Gewichtsprozente auf 100 % ergänzen, auf eine Temperatur von 120-200°C,
b) homogenes Mischen der Komponenten A), B) und C) unter Anwendung von Scherkräften und unter Aufrechterhaltung der Erwärmungstemperatur,
c) Dispergieren der erhaltenen Mischung in einem Dispersionsmedium bei einer Temperatur gleich oder oberhalb der Schmelztemperatur der Ausgangskomponenten A), B) und C) unter weiterer Polykondensation des Polyester-Präkondensats A), und/oder deren Monomeren bis zur Erzielung eines Polyesters mit einem gewünschten Molekulargewicht,
d) Abkühlen der Dispersion und Zugabe eines üblichen Vernetzers für den Polyester und gegebenenfalls von üblichen Additiven im Temperaturbereich von 60 bis 140°C.

Das homogene Mischen der Komponenten unter Anwendung von Scherkräften kann beispielsweise in einer Zeit von 10 bis 100 Minuten erfolgen, je nach Art der Ausgangskomponenten, insbesondere je nach Art und Menge der eingesetzten Pigmente.

Zum Erreichen des gewünschten Molekulargewichtes des Polyesters bis zu einem Bereich von beispielsweise 50 000 g/Mol kann die Temperatur im Dispersionsmedium nach Zugabe der Zusammensetzung in einem Bereich von 120 bis 280°C liegen. Nach Erreichen des gewünschten Molekulargewichtes kann der Abbruch der Reaktion erfolgen durch Senkung der Temperatur. Der Abbruch der Reaktion kann zu einem beliebigen Zeitpunkt durch entsprechende Abkühlung erfolgen.

Für die Herstellung von Pulverlackzusammensetzungen kann vor der Zugabe des oder der Vernetzer das Verfahren bis zum gewünschten endgültigen Molekulargewicht kontinuierlich fortgeführt werden.

Es ist möglich, das Verfahren nach Erwärmung der erfindungsgemäß zu verwendenden Zusammensetzung und deren homogenen Mischung unter Anwendung von Scherkräften, also nach Erhalt eines nach Zusatz von Pigmenten und gegebenenfalls Netzadditiven homogen gemischten farbigen Polyester-Präkondensates zu unterbrechen, und das farbige Polyester-Präkondensat bis zu seiner weiteren Umsetzung zwischenzulagern.

Vorzugsweise erfolgt die kontinuierliche Weiterführung des Verfahrens bis zur Erzielung eines Polyesters mit dem gewünschten endgültigen Molekulargewicht. Dies wird erreicht durch Aufrechterhalten der Temperatur in einem Bereich beispielsweise zwischen 120 und 280°C im Dispersionsmedium und Abdestillieren der Kondensationsprodukte, wie z.B. Wasser, Methanol. Daran anschließend wird zur Herstellung von Pulverlackzusammensetzungen die Dispersion mit der erfindungsgemäß zu verwendenden Zusammensetzung auf Temperaturen zwischen 60 und 140°C abgekühlt und der oder die Vernetzer sowie gegebenenfalls weitere Additive unter diesen Bedingungen dem Dispersionsbad zugefügt. Nach Abkühlung der Dispersion, Abtrennung und Trocknung nach üblichen Verfahren resultiert der fertige farbige Pulverlack.

Zur Weiterverarbeitung des gegebenenfalls zwischengelagerten farbigen Polyester-Präkondensates kann dieses nach Erwärmen auf eine Temperatur von 120 bis 200°C in einem Dispersionsmedium gegebenenfalls mit Dispersionsstabilisatoren bis zum Erreichen des endgültigen Molekulargewichtes dispergiert werden bei einer Temperatur gleich oder oberhalb der Schmelztemperatur der Ausgangskomponenten, z.B. bei 180 bis 280°C. Nach Abkühlung der Dispersion auf eine Temperatur von 60 bis 140°C kann die Zugabe des Vernetzers und gegebenenfalls der Additive zu dem Dispersionsmedium erfolgen und nach Abkühlen, Abtrennen und Trocknung der fertige farbige Pulverlack resultieren.

Nach dem Abkühlen auf beispielsweise Raumtemperatur oder unterhalb 60°C, Abtrennen und Trocknen der Partikel resultiert nach dem erfindungsgemäßen Verfahren ein farbiger Pulverlack, dessen Partikelstruktur einen homogenen Aufbau aufweist und dessen Korngrößenverteilung in einem engen Bereich von 10 bis 50 Mikrometer liegt.

Als Dispersionsgrundlage können beispielsweise aliphatische Öle mit einem Siedepunkt von 150 bis 300°C dienen. Die Öle sind in der Regel aromatenfrei. Gegebenenfalls können auch Aromaten enthalten sein, vorzugsweise unter 2 Gew.-%.

Das Dispersionsbad kann gegebenenfalls einen oder mehrere Dispersionsstabilisatoren enthalten, beispielsweise bis zu 5 Gew%, bezogen auf die Polyesterkomponente. Dies können übliche Netzadditive sein, welche durch Rühren in das Bad eingebracht werden.

Das erfindungsgemäß zu verwendende Polyester-Präkondensat der Komponente A) kann in üblicher Weise durch Reaktion von Polycarbonsäuren, deren Anhydriden und/oder Estern mit Polyalkoholen hergestellt werden. Die Veresterung kann in üblicher Weise, z.B. in Stickstoffatmosphäre bei erhöhter Temperatur, beispielsweise zwischen 120 und 200 °C ablaufen bis zur gewünschten Viskosität, beispielsweise von kleiner als 1000 mPa.s, insbesondere kleiner als 500 mPa.s.

Als Polycarbonsäurekomponente werden bevorzugt Dicarbonsäurekomponenten eingesetzt. Die Dicarbonsäurekomponenten können aliphatische, cycloaliphatische und/oder aromatische Dicarbonsäuren und/oder deren Anhydride sein. Dies sind beispielsweise Adipinsäure, Sebacinsäure, Dodecansäure, 1,4-Cyclohexandicarbonsäure, Dimerfettsäure, Phthalsäure, Isophthalsäure, Terephthalsäure. Die Säuren können einzeln oder als Gemisch verwendet werden. Die Carbonsäuren können auch weitere funktionelle Gruppen enthalten, z.B. Sufonsäuregruppen.

Als Polyolkomponenten sind bevorzugt Diole oder Diole im Gemisch mit Polyolen verwendbar. Beispiele für Diole sind aliphatische und/oder cycloaliphatische Diole, wie z.B. Ethylenglykol, Diethylenglykol, Propandiol, Hexandiol, Propylenglykol, Cycolhexandimethanol, Neopentylglykol, Hydroxipivalinsäure, Neopentylglykolester. Als Polyole im Gemisch mit Diolen sind beispielsweise Triole verwendbar, beispielweise Trimethylolpropan.

Zur Erhöhung der Funktionaltät des Polyesters, beispielsweise durch Einführen von Carbonyl- und/oder Hydroxylgruppen, können auch höherwertige Polycarbonsäuren und/oder Polyole eingesetzt werden.

Das Polyester-Präkondensat kann hydoxyfunktionell und/oder carboxyfunktionell sein. Die Hydroxy- und/oder Carboxyfunktionen können durch geeignete Auswahl der Ausgangsstoffe und/oder deren Mengenanteile eingeführt werden. Das molare Verhältnis von Diol bzw. Diol und/oder Polyol zu Dicarbonsäure oder Dicarbonsäureanhydrid kann beispielsweise 1,2 : 1 bis 0,8 : 1 betragen.

Bei der Herstellung des Präkondensates wird vorzugsweise so vorgegangen, daß die Dicarbonsäurekomponente wie beispielsweise Terephthalsäure, Isophthalsäure, Adipinsäure oder Fumarsäure gemeinsam mit der Diol- und/oder Polyolkomponente umgesetzt wird, bei erhöhter Temperatur von beispielsweise 120 bis 200°C, wobei in Gegenwart von üblichen Veresterungskatalysatoren gearbeitet werden kann. Veresterungskatalysatoren sind beispielsweise Dibutylzinndilaurat, Zinkacetat, Zinnchlorid oder Tetrabutoxytitanat.

Anstelle des erfindungsgemäß verwendbaren Präkondensates oder gegebenenfalls zusammen damit, können auch die zu seiner Herstellung zu verwendenden Monomere, d.h. Polycarbonsäuren bzw. deren Anhydride und Polyalkohole, wie vorstehend genannt, und im angegebenen Mengenverhältnis, als Komponente A zum Einsatz kommen.

Als erfindungsgemäß zu verwendende Komponente B) kommen Pigmente zum Einsatz. Als Pigmente sind alle organischen oder anorganischen Pigmente oder Farbstoffe einsetzbar, welche temperaturstabil sind bei Temperaturen von mindestens 200°C. Es können auch Mischungen von unterschiedlichen Pigmenten bzw. Farbstoffen zum Einsatz kommen. Beispiele für anorganische Pigmente sind Titandioxid, Eisenoxidrot, Eisenoxidbraun, Eisenoxidschwarz, Ruß, Chromtitangelb, Kolbalt/Aluminiumoxid und Beispiele für organische Pigmente sind Verbindungen aus der Klasse der Phthalocyanine, Chrinacridone, Azopigmente, Küpenfarbstoffe. Es sind auch Effektpigmente einsetzbar, z.B. Perlglanzpigmente vom Typ Iriodin.

Die Pigmente können auch dem Fachmann geläufige Füllstoffe, wie beispielsweise Bariumsulfat, Calciumcarbonat, Kaolin enthalten.

Darüberhinaus können auch Pigmentpräparationen verwendet werden, bei denen beispielsweise die Pigmente bereits in Diole und/oder Polyole vordispergiert sind, wobei die Diole und/oder Polyole ihrerseits Komponenten der erfindungsgemäß hergestellten Polyester sein können.

Als Komponente C) gegebenenfalls verwendete Netzadditive bzw. Dispersionsstabilisatoren können die dem Fachmann geläufigen eingesetzt werden, z.B. nichtionogene und/oder ionogene Netzmittel. Als Netzadditive sind beispielsweise auch einsetzbar sogenannte ampholytische Copolymere. Sie können monomerer, oligomerer und/oder polymerer Natur sein. Gegebenenfalls können weitere lackübliche Additive zugesetzt werden, beispielsweise Verlaufsmittel, Entschäumer sowie Katalysatoren, Mattierungsmittel (beispielsweise Kittel, Lehrbuch der Lacke und Beschichtungen, Bd. 3, Colomb-Verlag, 1976).

Die resultierenden Polyester können thermoplastisches Verhalten aufweisen und sie können funktionelle Gruppen enthalten, über welche die Vernetzung möglich ist.

Als Vernetzer sind die dem Fachmann bekannten Verbindungen einsetzbar. Dies sind beispielsweise Epoxide, beispielsweise auf der Basis von Diglycidyl-Bisphenol A sowie Triglycidylisocyanurat. Weitere Vernetzungsmittel sind Mittel auf der Basis von Aminoplastharzen, wie beispielsweise Melaminharze, Harnstoffharze, Dicyandiamidharze. Weiterhin können Isocyanatvernetzer eingesetzt werden. Dies sind die als Lackpolyisocyanate bekannte aliphatischen, cycloaliphatischen oder aromatischen Di-oder Polyisocyanate. Die reaktiven Isocyanatgruppen können mit bekannten Blockierungsmitteln wie niedermolekularen Alkoholen, Aminoalkoholen, Oximen, Lactamen oder Acetessigderivaten in üblicher Weise blockiert sein.

Der Gehalt an Vernetzern beträgt üblicherweise 2 bis 50 Gew.-%, beispielsweise 2 bis 20 Gew%, bevorzugt 5 bis 10 Gew%, bezogen auf die Polyesterkomponente. Die dem Fachmann geläufigen Epoxy/Polyester-Hybridsysteme können bis zu 50 Gew% Vernetzer enthalten.

Es können somit beispielsweise die auf dem Pulverlackbereich bekannten Bindemittel/ Härter-Systeme auf der Basis von Polyestern zum Einsatz kommen, beispielsweise funktionelle Polyester/ Triglycidylisocyanurat (TGIC)-Härter, saure Polyester/ Epoxidhärter, Polyesteracrylatpulver.

Die resultierenden Pulverlacke erreichen bezüglich ihrer Vernetzungstemperatur und der Gelzeit gleich gute Werte im Vergleich zu Pulverlacken, die nach herkömmlichen Methoden, beispielsweise über Extrusion, hergestellt wurden.

Die resultierenden vorwiegend kugelpulverförmigen Partikel weisen einen homogenen Partikelaufbau auf mit einem engen Korngrößenbereich, und sie sind homogen pigmentiert. Sie können hergestellt werden beispielsweise mit einem zahlenmittleren Molekulargewicht (Mn) des Bindemittelanteils von bis 50000 g/Mol. Der überwiegende Teil der Partikel weist eine Partikelgröße von kleiner 50 Mikrometer, bevorzugt kleiner 40 Mikrometer und besonders bevorzugt kleiner 30 Mikrometer auf.

Die erfindungsgemäß hergestellten Pulver werden eingesetzt als Überzugsmittel für Pulverbeschichtungen. Als Substrate sind beispielsweise Metall- oder Kunststoffsubstrate geeignet.

Die Pulverlack-Zusammensetzung kann mit den für Pulverlack üblichen Methoden, z.B. elektrostatische Applikation über Koronaentladung oder Triboelektrik auf die zu beschichtenden Oberflächen aufgebracht und eingebrannt werden. Es können Schichtdicken von beispielsweise 15 bis 200 Mikrometer, bevorzugt 20 bis 75 Mikrometer aufgetragen werden. Das Einbrennen der Pulverlacksysteme erfolgt bei den für eine vollständige Vernetzung erforderlichen Temperatur- und Zeitbedingungen, beispielsweise bei Temperaturen von 100 bis 250°C und Zeiten von 5 bis 30 Minuten.

Aufgrund der homogen aufgebauten Partikel und der homogenen Pigmentierung dieser Partikel können Pulverbeschichtungen mit sehr guten Oberflächeneigenschaften erzielt werden. Im Vergleich zu den bisher bekannten NAD-Prozessen war es überraschend, daß aufgrund der erfindungsgemäßen Verfahrensweise eine derartige Homogenität und Komgrößenverteilung der Partikel erreichbar sind, welche nach dem Auftragen als Pulverlack zu gleichmäßigen und homogenen Lackoberflächen führen.

Die nachfolgenden Beispiele dienen der Erläuterung der Erfindung:

### Beispiel 1

### Herstellung eines erfindungsgemäß eingesetzten Polyesterpräkondensates

4090 g Dimethylterephthalat, 888,4 g Dimethylisophthalat, 2814 g Neopentylglykol und 1,5 g Manganacetattetrahydrat als Katalysator werden gemeinsam in einen Rundkolben eingewogen und auf 150°C unter Inertgasatmosphäre erwärmt. Über einen Zeitraum von 4 Stunden erfolgt anschließend eine Temperaturerhöhung auf 225°C. Nach Aufarbeitung resultieren 6181,1 g eines Polyesterpräkondensates.

### Beispiel 2

### Herstellung von erfindungsgemäß eingesetzten pigmenthaltigen Polyesterpräkondensaten

In ein Gefäß mit einem Durchmesser von 8,5 cm Durchmesser werden Polyesterpräkondensat gemäß Beispiel 1 und Pigment eingewogen und das Gemisch auf 150°C erwärmt. Danach erfolgt die Zugabe von Netzmitteln. Die verwendeten Mengen in g sind nachfolgend angegeben:

| | 2a | 2b | 2c | 2d | 2e |
|---|---|---|---|---|---|
| Präkondensat | 320 | 313,2 | 378 | 378 | 378 |
| Titandioxid, Typ 2160 (Kronos) | 80 | 80 | - | - | - |
| Ruß VW 200 (Degussa) | - | - | 20 | - | - |
| Phthalocyaninblau | - | - | - | 20 | - |
| Irgazinrot BO (Ciba) | - | - | - | - | 20 |
| Netzmittel Additol XL260 (Vianova) | - | 6,8 | 2 | - | 2 |
| Netzmittel Genapol T800 (Hoechst) | - | - | - | 2 | - |

Mittels eines Schnellrührers vom Typ Dispermat CV werden die Komponenten unter Zuhilfenahme einer Zahnscheibe mit einem Durchmesser von 4 cm 10 bis 60 Minuten lang bei 8000 Umdrehungen pro Minute homogen vermischt.

### Beispiel 3

### Herstellung eines weißen vernetzbaren Pulverlackes

287,4 g des pigmentierten Polyesterpräkondensates aus Beispiel 2b, 1 180 g Isopar P und 45 g Isopar L als Dispersionsöl und 88 mg Antimontrioxid werden in einen 1l-Reaktor eingewogen und erwärmt. Wenn alle Komponenten geschmolzen sind, bei einer Reaktionstemperatur von 150°C, erfolgt unter kräftigem Rühren des Reaktorinhaltes eine Temperaturerhöhung auf die Siedetemperatur des Dispersionsöles von 230°C. Die Reaktionsmischung wird eine Stunde lang auf dieser Temperatur belassen unter weiterem Rühren und Abdestillieren der Kondensationsprodukte. Nach Abkühlung der Dispersion auf 100 bis 120°C werden 15,7 g Triglycidylisocyanurat (TGIC) zu der Mischung gegeben. Nach weiterer Abkühlung auf Raumtemperatur, Filtration des Pulvers, waschen und trocknen resultiert ein Pulver mit einem engen Korngrößenbereich und einer Partikelgröße von 30 bis 40 Mikrometer. Nach elektrostatischem Auftrag und Härtung bei 180°C für 20 Minuten erhält man eine gleichmäßige und homogene Lackoberfläche.

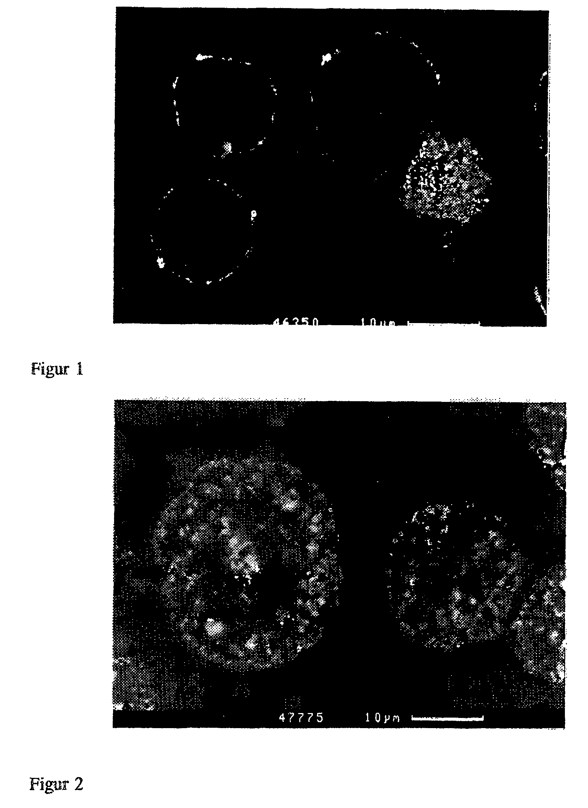

Die beigefügten Figuren 1 und 2 sind REM-Aufnahmen (Rasterelektronenmikroskopie) von Pulverlacken. Figur 1 zeigt Partikel eines nach dem Stand der Technik (NAD-Prozeß) hergestellten mit Titandioxid pigmentierten Polyesterpulverlackes. Man erkennt, daß das Titandioxid nur an der Peripherie der Polyesterpulverlackpartikel angesiedelt ist. Ein großer Teil der Pigmente ist außerdem in dem Dispersionsmedium (Wärmeüberträger) agglomeriert und nicht im Pulver dispergiert.

Figur 2 hingegen zeigt erfindungsgemäß hergestellte Polyesterpulverlackpartikel. Man erkennt, daß die Pigmente nahezu homogen in den Polyesterpartikeln verteilt sind und keine zusätzlichen Agglomerate im Dispersionsmedium vorliegen.

## Patentansprüche

1. Verfahren zur Herstellung einer Pulverlackzusammensetzung auf Polyesterbasis durch
a) gemeinsames oder getrenntes Erwärmen von
A) 99-40 Gew.-% eines oder mehrerer Polyester-Präkondensate, und/oder von zu deren Herstellung verwendbaren Monomeren,
B) 1-60 Gew.-% eines oder mehrerer Pigmente und
C) 0-10 Gew.-% eines oder mehrerer Netzadditive und/oder weiterer lacküblicher Additive,
wobei sich die Gewichtsprozente auf 100 % ergänzen, auf eine Temperatur von 120-200°C,
b) homogenes Mischen der Komponenten A), B) und C) unter Anwendung von Scherkräften und unter Aufrechterhaltung der Erwärmungstemperatur,
c) Dispergieren der erhaltenen Mischung in einem Dispersionsmedium bei einer Temperatur gleich oder oberhalb der Schmelztemperatur der Ausgangskomponenten A), B) und C) unter weiterer Polykondensation des Polyester-Präkondensats A), und/oder der Monomeren bis zur Erzielung eines Polyesters,
d) Abkühlen der Dispersion und Zugabe eines üblichen Vernetzers für den Polyester und gegebenenfalls von üblichen Additiven im Temperaturbereich von 60 bis 140°C.

2. Verfahren nach Anspruch 1, **dadurch gekennzeichnet, daß** nach dem Mischschritt b) eine Zwischenlagerung der erhaltenen Mischung erfolgt.

3. Verfahren nach einem der Ansprüche 1 oder 2, **dadurch gekennzeichnet, daß** das in Stufe c) verwendete Dispersionsmedium einen oder mehrere übliche Dispersionsstabilisatoren enthält.

4. Verfahren nach einem der Ansprüche 1 bis 3, **dadurch gekennzeichnet, daß** als Dispersionsmedium eine inerte Flüssigkeit mit einem Siedepunkt im Bereich von 150 bis 300°C verwendet wird.

5. Verwendung der nach einem der Ansprüche 1 bis 4 erhaltenen Pulverlackzusammensetzungen zur Beschichtung von Substraten.

6. Beschichtetes Substrat, erhalten gemäß Anspruch 5.

## Claims

1. Process for the production of a polyester-based powder coating composition by
a) joint or separate heating of
A) 99-40 wt.% of one or more polyester precondensates and/or monomers usable for the production thereof,
B) 1-60 wt.% of one or more pigments and
C) 0-10 wt.% of one or more wetting additives and/or further conventional lacquer additives
wherein the weight percentages add up to 100%, to a temperature of 120-200°C,
b) homogeneous mixing of components A), B) and C) with application of shear forces and while maintaining the heating temperature,
c) dispersion of the resultant mixture in a dispersion medium at a temperature identical to or greater than the melting temperature of the starting components A), B) and C) with continued polycondensation of the polyester precondensate A) and/or of the monomers until a polyester is obtained,
d) cooling of the dispersion and addition of a conventional crosslinking agent for the polyester and optionally of conventional additives in the temperature range from 60 to 140°C.

2. Process according to claim 1, **characterised in that**, after the mixing step b), the mixture obtained is kept in intermediate storage.

3. Process according to one of claims 1 or 2, **characterised in that** the dispersion medium used in stage c) contains one or more conventional dispersion stabilisers.

4. Process according to one of claims 1 to 3, **characterised in that** an inert liquid having a boiling point in the range from 150 to 300°C is used as the dispersion medium.

5. Use of the powder coating compositions obtained according to one of claims 1 to 4 for coating substrates.

6. Coated substrate obtained according to claim 5.

## Revendications

1. Procédé de fabrication d'une composition de peinture en poudre à base de polyesters, par
a) chauffage, commun ou séparé, à une température de 120 à 200°C,
A) de 99 à 40 % en poids d'un ou plusieurs précondensats de polyesters et/ou de monomères utilisables pour leur préparation,
B) de 1 à 60 % en poids d'un ou plusieurs pigments, et
C) de 0 à 10 % d'un ou plusieurs additifs mouillants et/ou d'autres additifs usuels dans les peintures,
la somme des pourcentages en poids étant de 100 %,
b) mélange homogène des composants A), B) et C), par utilisation de forces de cisaillement et tout en maintenant la température de chauffage,
c) dispersion du mélange obtenu dans un milieu de dispersion à une température supérieure ou égale à la température de fusion des composants de départ A), B) et C), avec polycondensation plus poussée du précondensat de polyester A) et/ou des monomères, jusqu'à obtention d'un polyester,
d) refroidissement de la dispersion et addition d'un agent de réticulation usuel pour le polyester, et éventuellement d'additifs usuels, dans la plage de températures de 60 à 140 °C.

2. Procédé selon la revendication 1, **caractérisé en ce que**, après l'étape de mélange b), on procède à un stockage intermédiaire du mélange obtenu.

3. Procédé selon l'une des revendications 1 ou 2, **caractérisé en ce que** le milieu de dispersion utilisé dans l'étape c) contient un ou plusieurs stabilisants usuels de dispersion.

4. Procédé selon l'une des revendications 1 à 3, **caractérisé en ce qu'**on utilise en tant que milieu de dispersion un liquide inerte ayant un point d'ébullition compris entre 150 et 300°C.

5. Utilisation des compositions de peinture en poudre selon l'une des revendications 1 à 4 pour revêtir des substrats.

6. Substrat revêtu, obtenu selon la revendication 5.
